# EUROPEAN PATENT APPLICATION

(11) **EP 4 707 979 A1**
(43) Date of publication of application: **11.03.2026**
(21) Application number: 25201004.6
(22) Date of filing: 09.09.2025
(51) Int. Cl.: G05B 23/02, G06F 11/07

(54) **FAULT DETECTION METHOD, ELECTRONIC DEVICE, AND STORAGE MEDIUM**

(30) Priority: 09.09.2024 CN 202411260022; 02.12.2024 WO PCT/CN2024/136196
(71) Applicant: Eve Energy Co., Ltd., Huizhou, Guangdong 516006 (CN)
(72) Inventor: ZHAO, Wenjing, Huizhou, Guangdong, 516006 (CN)
(74) Representative: Studio Torta S.p.A.

(57) **Abstract**

A fault detection method, an electronic device, and a storage medium are disclosed. The fault detection method includes acquiring (S110) operational data of at least one component to be detected under at least one collection metric; determining (S120) an analysis result of the operational data based on the operational data acquired in a preset duration, wherein the analysis result includes a fault duration and a fault frequency of the at least one component to be detected in the preset duration; determining (S130) a target fault type of the at least one component to be detected based on the fault duration and the fault frequency in the analysis result, as well as reference data pre-determined corresponding to the at least one component to be detected; and determining (S140) troubleshooting information corresponding to the at least one component to be detected when the target fault type is a preset fault type.

## Description

### TECHNICAL FIELD

The present invention relates to the technical field of data processing, and in particular, to a fault detection method, an electronic device, and a storage medium.

### BACKGROUND

Currently, when using a controller to detect faults in various components, a primary method involves setting a fault threshold. When a component fails, a parameter corresponding to the faulty component is detected. When the parameter meets the fault threshold and persists for a certain duration, it is determined that a fault exists.

However, in the above method, fault determination relies solely on the duration of the fault, resulting in low accuracy of fault detection. Some intermittent hardware faults cannot be accurately detected, reducing reliability of the fault detection and hindering normal operation of components.

### SUMMARY

The present invention provides a fault detection method, an electronic device, and a storage medium, which achieve accurate fault detection and facilitate troubleshooting, thereby ensuring normal operation of a component to be detected.

The present invention is defined by the independent claims as appended. Developments are set forth in the dependent claims.

In some possible implementations, the present invention provides a fault detection method, including: acquiring operational data of at least one component to be detected under at least one collection metric; determining an analysis result of the operational data based on the operational data acquired in a preset duration, wherein the analysis result includes a fault duration and a fault frequency of the at least one component to be detected in the preset duration; determining a target fault type of the at least one component to be detected based on the fault duration and the fault frequency in the analysis result, as well as reference data pre-determined corresponding to the at least one component to be detected; and when the target fault type is a preset fault type, determining troubleshooting information corresponding to the at least one component to be detected.

In some possible implementations, the present invention provides a fault detection device. The device includes a data acquisition module, a data analysis module, a fault type determination module, and a troubleshooting information determination module. The data acquisition module is configured to acquire the operational data of the at least one component to be detected under at least one collection metric. The data analysis module is configured to determine an analysis result of the operational data based on the operational data acquired in a preset duration, wherein the analysis result includes a fault duration and a fault frequency of the at least one component to be detected in the preset duration. The fault type determination module is configured to determine a target fault type of the at least one component to be detected based on the fault duration and the fault frequency in the analysis result, as well as reference data pre-determined corresponding to the at least one component to be detected. The troubleshooting information determination module is configured to determine troubleshooting information corresponding to the at least one component to be detected when the target fault type is a preset fault type.

In some possible implementations, the present invention provides an electronic device, which includes: at least one processor; and a memory, communicatively connected to the at least one processor.

The memory stores one or more computer programs executable by the at least one processor, and the one or more computer programs, when executed by the at least one processor, cause the at least one processor to perform the fault detection method according to any embodiment of the present invention.

In some possible implementations, the present invention provides a non-transitory computer-readable storage medium, which stores one or more computer instructions that, when executed by a processor, implement the fault detection method according to any embodiment of the present invention.

In some possible implementations, the present invention provides a computer program product. The computer program product includes one or more computer programs, which when executed by a processor, implement the fault detection method according to any embodiment of the present invention.

The beneficial effects provided by the present invention are as follows. By acquiring the operational data of the at least one component to be detected under the at least one collection metric, a data foundation is laid for subsequent data processing. The analysis result of the operational data is determined based on the operational data acquired in the preset duration, enabling a determination of whether the at least one component to be detected has a fault. The target fault type of the at least one component to be detected is determined based on the fault duration and the fault frequency in the analysis result, as well as the reference data pre-determined corresponding to the at least one component to be detected. When the target fault type is the preset fault type, the troubleshooting information corresponding to the at least one component to be detected is determined to facilitate fault troubleshooting and handling. The present invention addresses an issue of inaccurate fault detection in the related technology and achieves accurate fault detection. By performing the troubleshooting of the at least one component to be detected based on the target fault type, faults in the at least one component to be detected can be promptly identified, ensuring normal operation of the at least one component to be detected.

It should be understood that the content described in this section is not intended to identify key or essential features of the embodiments of the present invention, nor is it intended to limit the present invention. Other features of the present invention will become readily apparent from the following description.

### BRIEF DESCRIPTION OF THE DRAWINGS

In order to more clearly illustrate the technical solutions in the embodiments of the present invention, the following briefly introduces the accompanying drawings required for describing the embodiments. Obviously, the drawings in the following description show only some embodiments of the present invention. For those of ordinary skill in the art, other drawings may be derived from these accompanying drawings without creative effort.
FIG. 1 is a flowchart of a fault detection method according to an embodiment of the present invention.
FIG. 2 is a block diagram of a vehicle control system according to an embodiment of the present invention.
FIG. 3 is a flowchart of the fault detection method according to an embodiment of the present invention.
FIG. 4 is a line chart of a fault frequency according to an embodiment of the present invention.
FIG. 5 is a block diagram of a fault detection device according to an embodiment of the present invention.
FIG. 6 is a block diagram of an electronic device implementing the fault detection method according to an embodiment of the present invention.

### DETAILED DESCRIPTION

To facilitate a better understanding of the solutions of the present invention by those skilled in the art, the technical solutions in the embodiments of the present invention will be described clearly and comprehensively below with reference to the accompanying drawings. It is to be understood that the described embodiments represent only some, but not all, embodiments of the present invention.

It should be noted that terms such as "first", "second", etc., used in the specification and claims of the present invention as well as in the aforementioned drawings are intended to distinguish similar objects and do not necessarily imply a specific order or sequence. It should be understood that data used in this manner may be interchanged where appropriate, so that the embodiments described herein can be implemented in orders other than those illustrated or described. Furthermore, the terms "comprising", "including", "having", and any variations thereof are intended to cover non-exclusive inclusion. For example, a process, method, system, product, or device that includes a series of steps or units is not necessarily limited to those expressly listed steps or units, but may include other steps or units not expressly listed or inherent to such processes, methods, products, or devices.

Before executing the technical solutions provided by the present invention, application scenarios can be described. The technical method provided by the embodiments of the present invention can be applied to a control system including a controller and at least one component to be detected in communication with the controller, to achieve fault detection. The controller includes a collection chip and a processing chip. The collection chip is configured to be in communication with at least one data collection sensor of the at least one component to be detected to acquire operational data collected by the at least one collection sensor. The processing chip is further configured to process the operational data acquired by the collection chip to achieve fault detection. It should be noted that the control system can be a new energy vehicle control system, a commercial energy storage control system, a home appliance control system, etc. The present invention does not limit the specific control system.

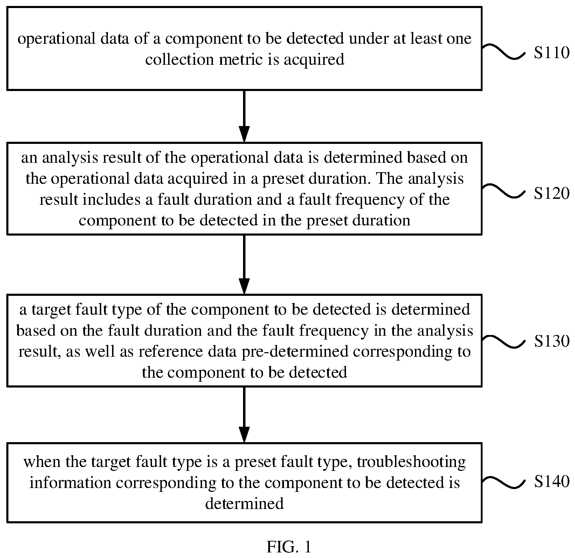

FIG. 1 is a flowchart of a fault detection method according to Embodiment 1 of the present invention. This embodiment is applicable to a fault detection scenario for a device containing at least one component to be detected. The method can be executed by a fault detection device, which can be implemented in hardware and/or software and configured in an electronic device such as a mobile phone, a computer, or a server. As shown in FIG. 1, the fault detection method includes operations S110 to S140.

In the operation S110, operational data of at least one component to be detected under at least one collection metric is acquired.

To ensure normal operation of a control system, at least one hardware component in the control system can be detected. The hardware component currently being detected is referred to as the component to be detected. For example, when the control system is a vehicle control system, the at least one component to be detected could be a battery. In the present invention, a fault detection process for each hardware component is nearly identical. Therefore, the following description takes a current component to be detected as an example. The at least one collection metric can be an indicator used to detect or evaluate an operational status, performance characteristics, or potential issues of the at least one component to be detected. For example, when the at least one component to be detected is a battery, data corresponding to the collection metric could include an indicator such as battery temperature, current, voltage. The operational data refers to data collected during operation of the at least one component to be detected.

For example, to facilitate collection of various data for the at least one component to be detected, at least one data collection sensor can be deployed at a preset location on the at least one component to be detected to collect the operational data corresponding to the at least one collection metric. It should be noted that the number and type of the at least one data collection sensor are determined based on actual requirements and the collection metric.

Optionally, the operational data of the at least one component to be detected under the at least one collection metric is acquired, including the following operations. When a data acquisition condition is satisfied, raw data collected by the at least one data collection sensor deployed at the preset location on the at least one component to be detected is acquired. Data cleaning is performed on the raw data to obtain the operational data corresponding to the at least one collection metric.

The data acquisition condition can be pre-set based on actual requirements. For example, at least one of the following conditions can be used as the data acquisition condition: the at least one component to be detected is properly powered, a data collection harness is functioning normally, and there are no other issues in the control system that could affect the fault detection. The preset location refers to a designated position on the at least one component to be detected. The data collection sensor is used to collect the raw data during the operation of the at least one component to be detected. Each data collection sensor corresponds to a distinct collection metric. The data cleaning involves processing or correcting the raw data to address inconsistencies or incompleteness in the raw data. Optionally, the data cleaning may include at least one of operations such as deduplication and data filling.

Specifically, before the data collection, it is first determined whether the data acquisition condition is satisfied. When the data acquisition condition is satisfied, the raw data collected by the at least one data collection sensor deployed at the preset location is acquired. The data cleaning is performed on the raw data to improve accuracy of subsequent data processing, resulting in the operational data under the at least one collection metric.

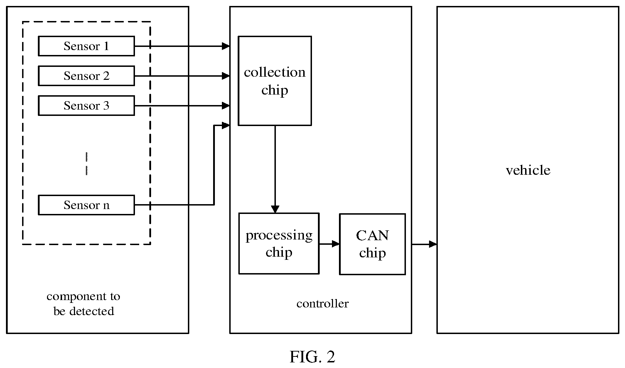

For example, referring to FIG. 2, the at least one data collection sensor is the sensors shown in the FIG. 2. FIG. 2 is a block diagram of a vehicle control system. The vehicle control system includes a controller and at least one component to be detected in communication with the controller. The at least one component to be detected is equipped with n data collection sensors to collect the raw data. The controller includes a collection chip, a processing chip, such as, Microcontroller Unit, and a Controller Area Network (CAN) chip. The collection chip communicates with the n data collection sensors on the at least one component to be detected via a collection harness. The processing chip processes the raw data acquired by the collection chip and transmits a processed result to the CAN chip. The CAN chip feeds a processed result back to a vehicle terminal via a CAN communication line, enabling the vehicle terminal to issue a fault alert or display a fault signal.

Based on the above example, before the raw data is collected, the controller can be awakened to complete initialization. When collecting the raw data from the at least one component to be detected, it is determined whether the data acquisition condition is satisfied. For example, whether the controller is operating normally, whether the controller's power supply is within a normal range, etc. When the data acquisition condition is satisfied, a fault status flag in the processing chip of the controller is set to "uncertain". The collection chip in the controller acquires the raw data from the at least one component to be detected via the collection harness connected to the at least one data collection sensor. A collection cycle is pre-set based on characteristics of the data collection sensor and functionality and precision of the controller. When the data acquisition condition is not satisfied, a corresponding prompt is generated, and an adjustment is made to the controller or other components to meet the data acquisition condition.

In the operation S 120, an analysis result of the operational data is determined based on the operational data acquired in a preset duration. The analysis result includes a fault duration and a fault frequency of the at least one component to be detected in the preset duration.

The preset duration refers to a pre-set fault detection duration. The fault duration is a duration during which the at least one component to be detected exhibits a fault. For example, the fault duration could be 4 seconds. The fault frequency is the number of times the fault occurs in the preset duration. Optionally, the analysis result can be determined using a preset fault trigger threshold. The preset fault trigger threshold is a pre-set value used to determine whether the at least one component to be detected has a fault. When the operational data reaches the preset fault trigger threshold, the fault frequency is incremented by 1. For example, the preset fault trigger threshold could be a battery temperature of 125°C. When a battery temperature in the collected operational data reaches 125°C in the preset duration, the fault frequency is incremented by 1.

Specifically, based on the operational data acquired in the preset duration, the number of times the operational data reaches the preset fault trigger threshold is determined, which is the fault frequency. In the preset duration, a duration for which the operational data remains at the preset fault trigger threshold each time is determined, which is the fault duration.

For example, based on the above example, the component to be detected is the battery and the operational data is a battery voltage, the preset fault trigger threshold for the operational data is set to 4.8V. In the preset duration, the number of times the collected operational data reaches 4.8V is determined, which is the fault frequency; a duration for which the operational data remains at 4.8V each time is determined, which is the fault duration. When the fault frequency is more than once and at least two durations are identified, the longest duration is taken as the fault duration.

In the operation S130, a target fault type of the at least one component to be detected is determined based on the fault duration and the fault frequency in the analysis result, as well as reference data pre-determined corresponding to the at least one component to be detected.

The reference data can be preset benchmark data. Optionally, the reference data could be a preset fault frequency threshold. The target fault type can include a persistent fault type and an intermittent fault type. When the fault duration of the at least one component to be detected is long, the target fault type of the at least one component to be detected can be determined as the persistent fault type. For example, when the fault duration of the at least one component to be detected is 5 minutes, reaching the preset duration, the target fault type could be the persistent fault type. When the fault duration of the at least one component to be detected is short and occurs randomly and intermittently, and when the fault frequency reaches the reference data, the target fault type can be determined as the intermittent fault type. For example, faults of the intermittent fault type could include at least one selected from a group consisting of a short circuit, an open circuit, a ground fault, or a power supply short in the at least one component to be detected. This embodiment does not impose specific limitations on intermittent fault types.

Specifically, based on the fault duration in the analysis result and the preset duration, it is determined whether the fault duration reaches the preset duration. When the fault duration reaches the preset duration, the target fault type of the at least one component to be detected is determined as the persistent fault type. When the fault duration fails to reach the preset duration, and the fault frequency in the preset duration meets the reference data, the target fault type of the at least one component to be detected is determined as the intermittent fault type. In this way, accurate identification of the target fault type of the at least one component to be detected can be achieved under different conditions, achieving precise fault detection.

In the operation S140, when the target fault type is a preset fault type, troubleshooting information corresponding to the at least one component to be detected is determined.

The preset fault type is a fault type which is pre-defined, which could be the persistent fault type or the intermittent fault type. Each fault type requires a distinct handling method, and corresponding troubleshooting information also varies. The troubleshooting information can be obtained by inspecting each part of the at least one component to be detected one by one.

Specifically, when the target fault type is determined to be the preset fault type, information corresponding to the target fault type is fed back to a target terminal. In this way, the target terminal is enabled to alert relevant personnel based on the feedback, prompting the relevant personnel to inspect each part of the at least one component to be detected one by one and obtain the corresponding troubleshooting information.

Optionally, the fault detection method further includes the following operations. The operational data of the at least one component to be detected, the analysis result corresponding to the operational data, and the troubleshooting information of the at least one component to be detected are recorded in a fault detection checklist, and the troubleshooting information of the at least one component to be detected is determined based on the fault detection checklist when the operational data of the at least one component to be detected is detected.

The fault detection checklist can be used to record the operational data, analysis result, and troubleshooting information for each fault detection in the preset duration. Using the fault detection checklist can reduce a time required for subsequent fault detection.

Specifically, operational data, the analysis result corresponding to the operational data, and the troubleshooting information of the at least one component to be detected corresponding to a current preset duration are recorded in the fault detection checklist. Based on the fault detection checklist, when the operational data of the at least one component to be detected is acquired later, the analysis result and the troubleshooting information corresponding to the operational data can be determined, simplifying subsequent fault detection processes.

Optionally, the fault detection method further includes the following operations. For a target device integrating the at least one component to be detected, the target device is optimized based on the troubleshooting information corresponding to each of the at least one component to be detected, and an optimized target device is obtained.

The target device may integrate the at least one component to be detected. For example, the target device is a new energy vehicle, the at least one component to be detected integrated in the target device may include a battery, a Vehicle Control Unit (VCU), or a speed sensor, among others. This is only an example and does not impose specific limitations on the target device.

Specifically, for the target device integrating the at least one component to be detected, the fault detection method described above can be applied to each component to be detected to determine a target fault type and troubleshooting information corresponding to the each component to be detected. Based on the troubleshooting information for the each component to be detected, the target device can be repaired or adjusted, resulting in the optimized target device that operates normally and stably.

In the technical solution of this embodiment, by acquiring the operational data of the at least one component to be detected under the at least one collection metric, a data foundation is laid for subsequent data processing. The analysis result of the operational data is determined based on the operational data acquired in the preset duration, enabling a determination of whether the at least one component to be detected has a fault. The target fault type of the at least one component to be detected is determined based on the fault duration and the fault frequency in the analysis result, as well as the reference data pre-determined corresponding to the at least one component to be detected. When the target fault type is the preset fault type, the troubleshooting information corresponding to the at least one component to be detected is determined to facilitate fault troubleshooting and handling. The present invention addresses an issue of inaccurate fault detection in the related technology and achieves accurate fault detection. By performing the troubleshooting of the at least one component to be detected based on the target fault type, faults in the at least one component to be detected can be promptly identified, ensuring normal operation of the at least one component to be detected.

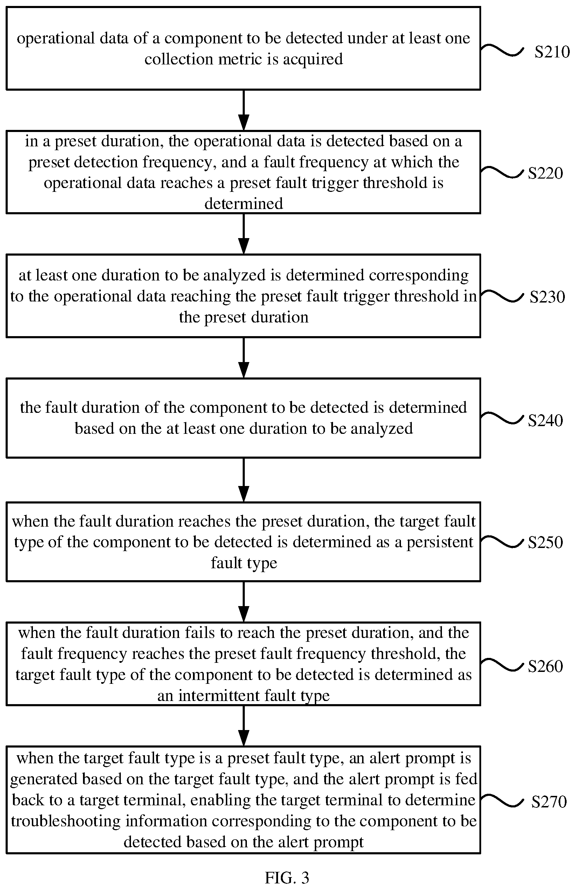

FIG. 3 is a flowchart of a fault detection method according to Embodiment 2 of the present invention. This embodiment is an optional implementation of the above embodiment. For specific details, refer to the technical solution of this embodiment. Terms identical or corresponding to those in the above embodiment are not repeated here. As shown in FIG. 3, the fault detection method includes the following operations S210-S270.

In the operation S210, operational data of at least one component to be detected under at least one collection metric is acquired.

In the operation S220, in a preset duration, the operational data is detected based on a preset detection frequency, and a fault frequency at which the operational data reaches a preset fault trigger threshold is determined.

The preset detection frequency is a frequency of detection in the preset duration, determined based on actual requirements. For example, the preset detection frequency may be 50 times per second, meaning the operational data is detected every 0.02 seconds.

Specifically, in the preset duration, the operational data is detected according to the preset detection frequency to determine the fault frequency at which the operational data reaches the preset fault trigger threshold.

For example, when the preset duration is 4 seconds and the preset detection frequency is 50 times per second, 200 detections can be performed in the preset duration. That is, in the preset duration, it is determined every 0.02 seconds whether the operational data reaches the preset fault trigger threshold. When the operational data reaches the preset fault trigger threshold, the fault frequency is incremented by 1 until the fault frequency reaches a preset fault frequency threshold. When the fault frequency reaches the preset fault frequency threshold in the preset duration, the fault detection can be stopped, a fault status flag can be set to "Fail", and the target fault type can be determined. When the fault frequency fails to reach the preset fault frequency threshold in the preset duration, it is determined that no fault has occurred, the fault status flag is set to "Pass", and fault detection for a next preset duration begins.

In the operation S230, at least one duration to be analyzed is determined corresponding to the operational data reaching the preset fault trigger threshold in the preset duration.

The duration to be analyzed is a length of time the operational data remains at the preset fault trigger threshold.

Specifically, in the preset duration, each time the operational data reaches the preset fault trigger threshold during detection of the at least one component to be detected based on the preset detection frequency, the corresponding at least one duration to be analyzed is determined. This allows the target fault type of the at least one component to be detected to be determined based on the at least one duration to be analyzed.

In the operation S240, the fault duration of the at least one component to be detected is determined based on the at least one duration to be analyzed.

Specifically, the longest duration to be analyzed is identified from the at least one duration to be analyzed corresponding to the at least one component to be detected, and the longest duration is taken as the fault duration to determine the target fault type of the at least one component to be detected.

Optionally, the fault duration of the at least one component to be detected is determined based on the at least one duration to be analyzed, including the following operations. A longest duration to be analyzed is identified from the at least one duration to be analyzed, and the longest duration to be analyzed is taken as the fault duration of the at least one component to be detected.

Specifically, a length of each of the at least one duration to be analyzed is compared, and the longest duration to be analyzed of the at least one duration to be analyzed is identified as the fault duration. In this way, the target fault type of the at least one component to be detected can be determined based on whether the longest duration to be analyzed meets a certain condition.

When the reference data is a preset fault frequency threshold, the target fault type can be determined as follows. In the operation S250, when the fault duration reaches the preset duration, the target fault type of the at least one component to be detected is determined as a persistent fault type.

Specifically, when the fault duration reaches the preset duration, the target fault type of the at least one component to be detected is determined as the persistent fault type. In this way, the at least one component to be detected can be troubleshooted and optimized based on the current target fault type.

In the operation S260, when the fault duration fails to reach the preset duration, and the fault frequency reaches the preset fault frequency threshold, the target fault type of the at least one component to be detected is determined as an intermittent fault type.

Specifically, when the fault duration fails to reach the preset duration and the fault frequency reaches the preset fault frequency threshold, the target fault type of the at least one component to be detected is determined as the intermittent fault type. Conversely, when the fault duration fails to reach the preset duration and the fault frequency fails to reach the preset fault frequency threshold, the at least one component to be detected is determined to have no fault.

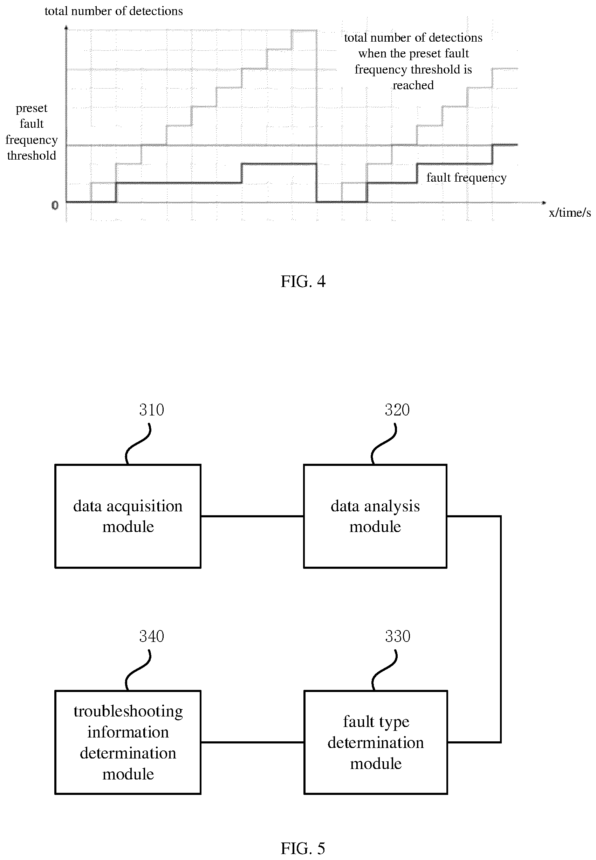

For example, referring to FIG. 4, which is a line chart of the fault frequency. A total number of detections is determined based on the preset duration and the preset detection frequency. Based on the above example, when it is determined every 0.02 seconds whether the operational data reaches the preset fault trigger threshold, the fault frequency is incremented by 1 and a total number of detections is incremented by 1 when the operational data reaches the preset fault trigger threshold, and the duration to be analyzed corresponding to the operational data reaching the preset fault trigger threshold is determined. When the operational data fails to reach the preset fault trigger threshold, the fault frequency is not incremented, but the total number of detections is incremented by 1. As shown in FIG. 4, in the preset duration, once the fault frequency reaches the preset fault frequency threshold, the current fault detection can be concluded, and the target fault type can be determined as an intermittent fault type. When the fault frequency fails to reach the preset fault frequency threshold in the preset duration, it is determined that the at least one component to be detected has no fault. Additionally, a duration in the preset duration at which the fault frequency reaches the preset fault frequency threshold can be determined and recorded in a fault detection checklist along with the preset duration for future reference.

In the operation S270, when the target fault type is a preset fault type, an alert prompt is generated based on the target fault type, and the alert prompt is fed back to a target terminal, enabling the target terminal to determine troubleshooting information corresponding to the at least one component to be detected based on the alert prompt.

The alert prompt is generated based on the target fault type and can be displayed on the target terminal in a form of voice, text, or other means. For example, taking a new energy vehicle as the target device, the alert prompt could be a fault message displayed at a preset location on a vehicle-mounted display screen. The target terminal may be a pre-defined display component, such as a display terminal of the new energy vehicle.

Specifically, when the target fault type is the preset fault type, the alert prompt is generated based on the target fault type and sent to the target terminal. In this way, the target terminal is enabled to issue an alert based on the alert prompt and determine the troubleshooting information corresponding to the at least one component to be detected.

For example, as shown in FIG. 2, based on the above example, after the processing chip processes the raw data acquired by the collection chip, the target fault type and the alert prompt corresponding to the target fault type are generated. The alert prompt is transmitted to the vehicle terminal via a CAN chip to facilitate fault troubleshooting for the at least one component to be detected. It should be noted that when the alert prompt is transmitted to the vehicle terminal, the fault frequency, fault duration, and other information stored in the processing chip are cleared, and a fault detection for a next preset duration begins anew.

The technical solution of this embodiment provides a data foundation for subsequent data processing by acquiring the operational data of the at least one component to be detected under the at least one collection metric. In the preset duration, the operational data is detected based on the preset detection frequency to determine the fault frequency at which the operational data reaches the preset fault trigger threshold, as well as the at least one duration to be analyzed corresponding to the operational data reaching the preset fault trigger threshold in the preset duration. The fault duration of the at least one component to be detected is determined based on the at least one duration to be analyzed. In this way, the determination of the target fault type based on the fault frequency and fault duration can be facilitated. When the fault duration reaches the preset duration, the target fault type of the at least one component to be detected is determined as the persistent fault type; when the fault duration fails to reach the preset duration and the fault frequency reaches the preset fault frequency threshold, the target fault type of the at least one component to be detected is determined as the intermittent fault type. When the target fault type is the preset fault type, the alert prompt is generated based on the target fault type and fed back to the target terminal, enabling the target terminal to determine the troubleshooting information corresponding to the at least one component to be detected based on the alert prompt, thereby facilitating fault troubleshooting and handling of the at least one component to be detected. The present invention addresses the issue of inaccurate fault detection in the related technology and achieves accurate fault detection. By performing the troubleshooting of the at least one component to be detected based on the target fault type, faults in the at least one component to be detected can be promptly identified, ensuring normal operation of the at least one component to be detected.

FIG. 5 is a block diagram of a fault detection device according to Embodiment 3 of the present invention. As shown in FIG. 5, the device includes a data acquisition module 310, a data analysis module 320, a fault type determination module 330, and a troubleshooting information determination module 340.

The data acquisition module 310 is configured to acquire the operational data of the at least one component to be detected under at least one collection metric. The data analysis module 320 is configured to determine an analysis result of the operational data based on the operational data acquired in a preset duration, wherein the analysis result includes a fault duration and a fault frequency of the at least one component to be detected in the preset duration. The fault type determination module 330 is configured to determine a target fault type of the at least one component to be detected based on the fault duration and the fault frequency in the analysis result, as well as reference data pre-determined corresponding to the at least one component to be detected. The troubleshooting information determination module 340 is configured to determine troubleshooting information corresponding to the at least one component to be detected when the target fault type is a preset fault type.

In the technical solution of this embodiment, by acquiring the operational data of the at least one component to be detected under the at least one collection metric, a data foundation is laid for subsequent data processing. The analysis result of the operational data is determined based on the operational data acquired in the preset duration, enabling a determination of whether the at least one component to be detected has a fault. The target fault type of the at least one component to be detected is determined based on the fault duration and the fault frequency in the analysis result, as well as the reference data pre-determined corresponding to the at least one component to be detected. When the target fault type is the preset fault type, the troubleshooting information corresponding to the at least one component to be detected is determined to facilitate fault troubleshooting and handling. The present invention addresses an issue of inaccurate fault detection in the related technology and achieves accurate fault detection. By performing the troubleshooting of the at least one component to be detected based on the target fault type, faults in the at least one component to be detected can be promptly identified, ensuring normal operation of the at least one component to be detected.

Based on the above embodiment, optionally, the data acquisition module includes a raw data acquisition unit and a data cleaning unit. The raw data acquisition unit is configured to acquire raw data collected by the at least one data collection sensor deployed at a preset location on the at least one component to be detected when a data acquisition condition is satisfied. The data cleaning unit is configured to perform data cleaning on the raw data to obtain the operational data corresponding to the at least one collection metric.

Optionally, the data analysis module includes A fault frequency determination unit, a duration-to-be-analyzed determination unit, and a fault duration determination unit. The fault frequency determination unit is configured to detect the operational data based on a preset detection frequency in a preset duration and determining the fault frequency at which the operational data reaches a preset fault trigger threshold. The duration-to-be-analyzed determination unit is configured to determine at least one duration to be analyzed corresponding to the operational data reaching the preset fault trigger threshold in the preset duration. The fault duration determination unit, configured to determine the fault duration of the at least one component to be detected based on the at least one duration to be analyzed.

Optionally, the fault duration determination unit is configured to identify a longest duration to be analyzed from the at least one duration to be analyzed, and taking the longest duration to be analyzed as the fault duration of the at least one component to be detected.

Optionally, when the reference data is a preset fault frequency threshold, the fault type determination module is configured to determine the target fault type of the at least one component to be detected as a persistent fault type when the fault duration reaches the preset duration and determine the target fault type of the at least one component to be detected as an intermittent fault type when the fault duration fails to reach the preset duration and the fault frequency reaches the preset fault frequency threshold.

Optionally, the troubleshooting information determination module is configured to generate an alert prompt based on the target fault type when the target fault type is a preset fault type, and feed the alert prompt back to a target terminal, enabling the target terminal to determine the troubleshooting information corresponding to the at least one component to be detected based on the alert prompt.

Optionally, the device further includes a data recording module. The data recording module is configured to record the operational data of the at least one component to be detected, the analysis result corresponding to the operational data, and the troubleshooting information of the at least one component to be detected in a fault detection checklist, wherein the troubleshooting information of the at least one component to be detected is determined based on the fault detection checklist when the operational data of the at least one component to be detected is detected.

Optionally, the device further includes a target device optimization module. The target device optimization module is configured to optimize the target device based on the troubleshooting information corresponding to each of the at least one component to be detected for a target device integrating the at least one component to be detected, and obtain an optimized target device.

The fault detection device provided by the embodiments of the present invention can perform the fault detection method described in any of the embodiments of the present invention, possessing the corresponding functional modules and beneficial effects.

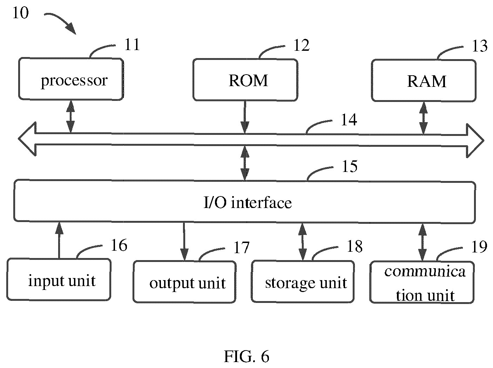

FIG. 6 is a block diagram of an electronic device according to Embodiment 4 of the present invention. The electronic device 10 is intended to represent various forms of digital computers, such as laptops, desktops, workstations, personal digital assistants, servers, blade servers, mainframes, and other suitable computers. The electronic device can also represent various forms of mobile devices, such as personal digital assistants, cellular phones, smartphones, wearable devices (e.g., helmets, glasses, watches, etc.), and other similar computing devices. Connections, relationships, and functions of the components shown herein are meant as examples and are not intended to limit the implementation of the present invention as described and/or claimed herein.

As shown in FIG. 6, the electronic device 10 includes at least one processor 11, and a memory communicatively connected to the at least one processor. For example, the memory may be a read-only memory (ROM) 12 or a random access memory (RAM) 13. The memory stores one or more computer programs executable by the at least one processor. The processor 11 can execute the one or more computer programs stored in the ROM 12 or loaded into the RAM 13 from a storage unit 18 to perform various appropriate actions and processes. The RAM 13 can also store various programs and data required for operation of the electronic device 10. The processor 11, ROM 12, and RAM 13 are connected to each other via a bus 14. An input/output (I/O) interface 15 is also connected to the bus 14.

A plurality of components of the electronic device 10 are connected to the I/O interface 15, including: an input unit 16, such as a keyboard or mouse; an output unit 17, such as various types of displays or speakers; a storage unit 18, such as a disk or optical disk; and a communication unit 19, such as a network card, modem, or wireless communication transceiver. The communication unit 19 allows the electronic device 10 to exchange information/data with other devices via computer networks such as the Internet and/or various telecommunications networks.

The processor 11 can be any processing component with processing and computing capabilities, either general-purpose or specialized. Examples of the processor 11 include, but are not limited to, central processing units (CPUs), graphics processing units (GPUs), various specialized artificial intelligence (AI) computing chips, processors running machine learning model algorithms, digital signal processors (DSPs), and any suitable processors, controllers, or microcontrollers. The processor 11 performs the methods and processes described above, such as the fault detection method.

In some embodiments, the fault detection method can be implemented as one or more computer programs, tangibly contained in a non-transitory computer-readable storage medium, such as the storage unit 18. In some embodiments, part or all of the computer programs can be loaded into and/or installed on the electronic device 10 via the ROM 12 and/or the communication unit 19. When the computer programs are loaded into the RAM 13 and executed by the processor 11, one or more steps of the fault detection method described above can be performed. Alternatively, in other embodiments, the processor 11 can be configured to perform the fault detection method in any other suitable manner, such as via firmware.

The various implementations of the systems and technologies described above can be implemented in digital electronic circuitry, integrated circuitry, a field-programmable gate array (FPGA), an application-specific integrated circuit (ASIC), an application-specific standard product (ASSP), a system-on-chip (SOC) system, a complex programmable logic device (CPLD), computer hardware, firmware, software, and/or combinations thereof. These implementations can include implementations in one or more computer programs executable and/or interpretable on a programmable system, where the programmable system includes at least one programmable processor, which can be specialized or general-purpose, and can receive data and instructions from, and transmit data and instructions to, a storage system, at least one input device, and at least one output device.

Computer programs for implementing the fault detection method of the present invention can be written in any combination of one or more programming languages. These computer programs can be provided to a processor of a general-purpose computer, specialized computer, or other programmable data processing apparatus, such that the computer programs, when executed by the processor, cause the functions/operations specified in the flowcharts and/or block diagrams to be implemented. The computer programs can be executed entirely on a machine, partially on the machine, as an independent software package with partial execution on the machine and partial execution on the remote machine, or entirely on the remote machine or server.

Embodiment 5 of the present invention also provides a non-transitory computer-readable storage medium storing a computer instruction that, when executed by a processor, causes the processor to perform a fault detection method, which includes the following operations.

Operational data of at least one component to be detected under at least one collection metric is acquired. An analysis result of the operational data is determined based on the operational data acquired in a preset duration. The analysis result includes a fault duration and a fault frequency of the at least one component to be detected in the preset duration. A target fault type of the at least one component to be detected is determined based on the fault duration and the fault frequency in the analysis result, as well as reference data pre-determined corresponding to the at least one component to be detected. When the target fault type is a preset fault type, troubleshooting information corresponding to the at least one component to be detected is determined.

In the context of the present invention, the non-transitory computer-readable storage medium can be a tangible medium that contains or stores one or more computer programs for use by or in connection with an instruction execution system, apparatus, or device. The non-transitory computer-readable storage medium can include, but is not limited to, electronic, magnetic, optical, electromagnetic, infrared, or semiconductor systems, apparatuses, or devices, or any suitable combination thereof. Alternatively, the non-transitory computer-readable storage medium can be a machine-readable signal medium. More specific examples of the non-transitory machine-readable storage medium include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

To provide interaction with users, the systems and technologies described above can be implemented on an electronic device with: a display device (e.g., a cathode ray tube or liquid crystal display monitor) for displaying information to a user; and a keyboard and pointing device (e.g., a mouse or trackball) for the user to provide input to the electronic device. Other types of devices can also be used to provide interaction with the user; for example, feedback provided to the user can be any form of sensory feedback (e.g., visual, auditory, or tactile feedback), and user input can be received in any form (including acoustic, speech, or tactile input).

The system and technology described herein can be implemented in a computing system that includes a backend component (e.g., a data server), a computing system that includes a middleware component (e.g., an application server), a computing system that includes a frontend component (e.g., a user computer with a graphical user interface or a web browser through which the user can interact with implementations of the system and technology described herein), or a computing system that includes any combination of the backend component, middleware component, or frontend component. Components of the system can be interconnected by any form or medium of digital data communication (e.g., a communication network). Examples of the communication network include a local area network (LAN), a wide area network (WAN), a blockchain network, and the Internet.

The computing system can include a client and a server. The client and the server are generally remote from each other and interact through a communication network. A client-server relationship arises by running computer programs on corresponding computers, where these programs interact in the client-server relationship. The server can be a cloud server, also known as a cloud computing server or cloud host, which is a hosting product in a cloud computing service and addresses difficulties in management and weak scalability of a traditional physical host and VPS service.

It should be understood that the various process flows described above may be adapted by reordering, adding, or deleting operations. For instance, the operations described in present invention may be executed in parallel, sequentially, or in varying sequences-provided that the desired outcomes of the technical solutions of the present invention are achieved. No limitations are imposed herein.

Those skilled in the art should recognize that various modifications, combinations, sub-combinations, and substitutions may be made depending on design requirements and other factors.

## Claims

1. A fault detection method, wherein the fault detection method is applicable to a controller and at least one component to be detected in communication with the controller, wherein the controller is configured to acquire operational data of the at least one component to be detected and process the operational data, **characterized in that** the fault detection method comprising:
acquiring (S110, S210) the operational data of the at least one component to be detected under at least one collection metric;
determining (S120) an analysis result of the operational data based on the operational data acquired in a preset duration, wherein the analysis result comprises a fault duration and a fault frequency of the at least one component to be detected in the preset duration;
determining (S130) a target fault type of the at least one component to be detected based on the fault duration and the fault frequency in the analysis result, as well as reference data pre-determined corresponding to the at least one component to be detected; and
determining (S140) troubleshooting information corresponding to the at least one component to be detected under a condition that the target fault type is a preset fault type.

2. The fault detection method according to claim 1, wherein the acquiring of the operational data of the at least one component to be detected under at least one collection metric comprises:
acquiring raw data collected by at least one data collection sensor deployed at a preset location on the at least one component to be detected when a data acquisition condition is satisfied; and
performing data cleaning on the raw data to obtain the operational data corresponding to the at least one collection metric.

3. The fault detection method according to any one of claims 1-2, wherein the determining of an analysis result of the operational data based on the operational data acquired in the preset duration comprises:
detecting (S220) the operational data based on a preset detection frequency in a preset duration and determining the fault frequency at which the operational data reaches a preset fault trigger threshold;
determining (S230) at least one duration to be analyzed corresponding to the operational data reaching the preset fault trigger threshold in the preset duration; and
determining (S240) the fault duration of the at least one component to be detected based on the at least one duration to be analyzed.

4. The fault detection method according to claim 3, wherein the determining of the fault duration of the at least one component to be detected based on the at least one duration to be analyzed comprises:
identifying a longest duration to be analyzed among the at least one duration to be analyzed, and taking the longest duration to be analyzed as the fault duration of the at least one component to be detected.

5. The fault detection method according to any one of claims 1-4, wherein the reference data is a preset fault frequency threshold, and the determining of the target fault type of the at least one component to be detected based on the fault duration and the fault frequency in the analysis result, as well as reference data pre-determined corresponding to the at least one component to be detected comprises:
determining (S250) the target fault type of the at least one component to be detected as a persistent fault type when the fault duration reaches the preset duration; and
determining (S260) the target fault type of the at least one component to be detected as an intermittent fault type when the fault duration fails to reach the preset duration and the fault frequency reaches the preset fault frequency threshold.

6. The fault detection method according to any one of claims 1-5, wherein the determining of the troubleshooting information corresponding to the at least one component to be detected when the target fault type is the preset fault type comprises:
generating (S270) an alert prompt based on the target fault type when the target fault type is the preset fault type, and feeding the alert prompt back to a target terminal to enable the target terminal to determine the troubleshooting information corresponding to the at least one component to be detected based on the alert prompt.

7. The fault detection method according to any one of claims 1-6, further comprising:
recording the operational data of the at least one component to be detected, the analysis result corresponding to the operational data, and the troubleshooting information of the at least one component to be detected in a fault detection checklist, wherein the troubleshooting information of the at least one component to be detected is determined based on the fault detection checklist when the operational data of the at least one component to be detected is detected.

8. The fault detection method according to any one of claims 1-7, further comprising:
for a target device integrating the at least one component to be detected, optimizing the target device based on the troubleshooting information corresponding to each of the at least one component to be detected, and obtaining an optimized target device.

9. The fault detection method according to any one of claims 2-8, wherein when claim 2 is referred to, the controller comprises a collection chip and a processing chip, and wherein the collection chip is configured to be in communication with the at least one data collection sensor of the at least one component to be detected to acquire the operational data collected by the at least one collection sensor.

10. The fault detection method according to any one of claims 1-9, wherein the at least one collection metric is an indicator configured to detect or evaluate an operational status, performance characteristics, or potential issues of the at least one component to be detected.

11. The fault detection method according to any one of claims 1-10, wherein the analysis result is determined based on a preset fault trigger threshold, and the preset fault trigger threshold is configured to determine whether the at least one component to be detected has a fault.

12. The fault detection method according to any one of claims 2-11, wherein when claim 2 is referred to, the data acquisition condition requires at least one of: the at least one component to be detected being properly powered, a data collection harness being functioning normally, or absence of control system issues affecting fault detection.

13. The fault detection method according to any one of claims 2-12, wherein when claim 2 is referred to, the data cleaning comprises at least one of deduplication and data filling.

14. An electronic device, **characterized by** comprising:
at least one processor; and
a memory communicatively connected to the at least one processor;
wherein the memory stores one or more computer programs executable by the at least one processor, and the one or more computer programs, when executed by the at least one processor, cause the at least one processor to perform the fault detection method according to any one of claims 1-13.

15. A non-transitory computer-readable storage medium, **characterized by** storing a computer instruction that, when executed by a processor, causes the processor to perform the fault detection method according to any one of claims 1-13.
